# EUROPEAN PATENT APPLICATION

(11) **EP 4 350 812 A1**
(43) Date of publication of application: **10.04.2024**
(21) Application number: 22946052.2
(22) Date of filing: 27.12.2022
(51) Int. Cl.: H01M 4/525, H01M 4/505

(54) **POSITIVE ELECTRODE ACTIVE MATERIAL, BATTERY AND PREPARATION METHOD THEREFOR**

(30) Priority: 23.08.2022 CN 202211010331
(71) Applicant: Sunwoda Electric Vehicle Battery Co., Ltd., Shenzhen, Guangdong 518107 (CN)
(72) Inventor: HU, Yi, Guangdong 518107 (CN); CHEN, Wei, Guangdong 518107 (CN); OUYANG, Yunpeng, Guangdong 518107 (CN); XIE, Dong, Guangdong 518107 (CN)
(74) Representative: Murgitroyd & Company
(86) International application number: PCT/CN2022/142337
(87) International publication number: WO 2024/040829

(57) **Abstract**

Disclosed are a positive electrode active material, a battery and a method preparing the same. The positive electrode active material includes porous secondary particles, and satisfies 4≤BET×TD× (Dv90-Dv10) ≤14, in which BET denotes a value of a specific surface area of the positive electrode active material, with a unit of m²/g; TD denotes a value of a tap density of the positive electrode active material, with a unit of g/cm³; Dv90 denotes a particle size of the positive electrode active material having a cumulative volume distribution of 90%, with a unit of µm; and Dv10 denotes a particle size of the positive electrode active material having a cumulative volume distribution of 10%, with a unit of µm. The present disclosure improves the low-temperature power performance by controlling the particle morphology, the size and the pore structure of the positive electrode active material. Moreover, the effect of increasing the volumetric energy density of the battery is achieved by reasonably controlling the particle morphology, the particle size distribution and the tap density of the positive electrode active material.

## Description

The present disclosure claims priority to Chinese Patent Application No. 202211010331.4, filed on August 23, 2022, entitled "Positive Electrode Active Materials, Batteries, and Methods of Preparing Same", which is incorporated herein by reference in its entirety.

### TECHNICAL FIELD

The present disclosure relates to the field of new energy sources, and more particularly, to a positive electrode active material, a battery, and a method of preparing the same.

### BACKGROUND

Batteries, such as lithium ion batteries, have been widely used in various fields due to their advantages of high specific energy, good power performance, low self-discharge and long cycle life. At present, positive electrode active materials for batteries in electric vehicles are mainly ternary positive electrode active materials. However, their raw materials (such as cobalt sulfate and lithium salt) are expensive. To reduce the cost of electric vehicles, the volumetric energy density of lithium ion batteries is increased, so that the space proportion of battery modules on the vehicle can be reduced, which is of positive significance for the lightweight of new energy vehicles and the reduction of costs. Moreover, the use environment of the battery of the electric vehicle is becoming harsher, especially in cold weather, which brings a great challenge to the performance of the battery. Therefore, it is necessary to improve the low-temperature performance of the battery, especially the low-temperature power performance.

### SUMMARY

### SUMMARY

### TECHNICAL PROBLEMS

The present disclosure provides a positive electrode active material, a battery, and a method of preparing the same, which solves the problems of poor low-temperature power and low volumetric energy density of a battery prepared from the existing positive electrode active material.

### SOLUTIONS FOR SOLVING PROBLEMS

### TECHNICAL SOLUTIONS

According to a first aspect of the present disclosure, there is provided a positive electrode active material including secondary particles with pores thereon and satisfying 4≤BET×TD× (Dv90-Dv10) ≤14, wherein BET denotes a value of a specific surface area of the positive electrode active material, with a unit of m²/g; TD denotes a value of a tap density of the positive electrode active material, with a unit of g/cm³; Dv90 denotes a particle size of the positive electrode active material having a cumulative volume distribution of 90%, with a unit of µm; and Dv 10 denotes a particle size of the positive electrode active material having a cumulative volume distribution of 10%, with a unit of µm.

Optionally, in other embodiments of the present disclosure, 0.4≤BET≤3.5; 1.2≤TD≤2.6; 4≤Dv90≤18; and 1.5≤Dv10≤6.

Optionally, in other embodiments of the present disclosure, the positive electrode active material has a maximum pore size of Dₘₐₓ nm, satisfying 800≤Dₘₐₓ≤2200.

Optionally, in other embodiments of the present disclosure, the positive electrode active material has a half peak width of a pore size distribution being D_{HW} nm, satisfying 150≤D_{HW}≤450.

Optionally, in other embodiments of the present disclosure, the positive electrode active material has a porosity P_{c}, satisfying 45%≤P_{c}≤75%.

Optionally, in other embodiments of the present disclosure, the positive electrode active material has a powder press density of P_{d} g/cm³, satisfying 2.8≤P_{d}≤3.4.

Optionally, in other embodiments of the present disclosure, the positive electrode active material includes a compound represented by a formula of LiₓNi_{y}Co_{z}MeₖMₚO₂, Me is selected from at least one of Mn or Al, M includes at least one of Y, Nb, In, La, Zr, Ce, W, Al, Ti, Sr, Mg, Sb, V, Zn, Cu, Cr, or Fe, 0.8≤x≤1.1, 0<y<1, 0<z<1, 0<k<1, and 0≤p≤0.1.

Optionally, in other embodiments of the present disclosure, the positive electrode active material includes a lithium nickel cobalt manganese oxide including a nickel element, a cobalt element, and a manganese element, and the nickel element is present in an amount greater than 0.3 based on a sum of moles of the nickel element, the cobalt element, and the manganese element being 1.

According to a second aspect of the present disclosure, there is provided a method of preparing a positive electrode active material includes:
mixing either a manganese source or an aluminum source with a nickel source and a cobalt source, adding a precipitating agent and a complexing agent, and reacting to obtain a ternary material precursor;
mixing the ternary material precursor with a M element source and a lithium source, and performing a first sintering, cooling and crushing to obtain a M element-containing material;
mixing the M element-containing material with a coating element source, and performing a second sintering to obtain the positive electrode active material.

Optionally, in other embodiments of the present disclosure, the positive electrode active material includes a material represented by a formula of LiₓNi_{y}Co_{z}MeₖMₚO₂, Me is selected from at least one of Mn or Al, M includes at least one ofY, Nb, In, La, Zr, Ce, W, Al, Ti, Sr, Mg, Sb, V, Zn, Cu, Cr, or Fe, 0.8≤x≤1.1, 0<y<1, 0<z<1, 0<k<1, and 0≤p≤0.1.

Optionally, in other embodiments of the present disclosure, the nickel source includes at least one of nickel sulfate, nickel acetate or nickel nitrate.

Optionally, in other embodiments of the present disclosure, the cobalt source includes at least one of cobalt sulfate, cobalt acetate, or cobalt nitrate.

Optionally, in other embodiments of the present disclosure, the manganese source includes at least one of manganese sulfate, manganese acetate, or manganese nitrate.

Optionally, in other embodiments of the present disclosure, the aluminum source includes at least one of aluminum sulfate, aluminum acetate, or aluminum nitrate.

Optionally, in other embodiments of the present disclosure, the M element source includes at least one of zirconium nitrate, tungsten nitrate, aluminum nitrate, titanium nitrate, strontium nitrate, magnesium nitrate, yttrium nitrate, cerium nitrate, indium nitrate, niobium nitrate, lanthanum nitrate, antimony nitrate, vanadium nitrate, zinc nitrate, copper nitrate, chromium nitrate, iron nitrate, tungsten oxide, or zirconium oxide.

Optionally, in other embodiments of the present disclosure, the lithium source includes at least one of lithium hydroxide, lithium carbonate, lithium acetate, or lithium nitrate.

Optionally, in other embodiments of the present disclosure, the coating element source includes one or more of aluminum nitrate, titanium nitrate, cobalt nitrate, tungsten nitrate, yttrium nitrate, silicon oxide, boron oxide, phosphorus pentoxide, or aluminum oxide.

Optionally, in other embodiments of the present disclosure, an amount of the coating element source is 0.3 wt% to 0.7 wt% of the M element-containing material.

Optionally, in other embodiments of the present disclosure, the precipitating agent includes a sodium hydroxide solution, and the complexing agent includes ammonia water.

Optionally, in other embodiments of the present disclosure, the first sintering is performed at 600 to 1000°C for 3 to 16 hours.

Optionally, in other embodiments of the present disclosure, the second sintering is performed at 400 to 700°C for 1 to 9 hours.

According to a third aspect of the present disclosure, there is provided a battery, including a positive electrode sheet, and the positive electrode sheet includes a positive electrode current collector and a positive electrode active material layer disposed on the positive electrode current collector, and the positive electrode active material layer includes the positive electrode active material described above or the positive electrode active material prepared by the method described above.

Optionally, in other embodiments of the present disclosure, the positive electrode active material layer satisfies at least one of the following:
(i) the positive electrode active material layer has a real active area of A cm², satisfying 4×10⁴≤A≤2×10⁵;
(ii) the positive electrode active material layer has a press density of PD g/cm³, satisfying 2.4≤PD≤3.5;
(iii) the positive electrode active material layer has a porosity of Pₛ, satisfying 20%≤Pₛ≤40%;
(iv) when the temperature is -20°C, and the state of charge of the battery is 30%, the discharge power per unit volume of the positive electrode active material layer is P W/cm³, 8≤P≤30, P=P₀×PD/m, and P₀ W denotes the discharge power of the battery under the conditions; PD g/cm³ denotes the press density of the positive electrode active material layer; m g denotes the weight of the positive active material layer.

Optionally, A and P₀ satisfy: 0.6≤1000P₀/A≤1.

According to a fourth aspect of the present disclosure, there is provided an electrical device including the above-described battery.

### BENEFICIAL EFFECT OF THE INVENTION

### BENEFICIAL EFFECT

According to the embodiments of the present disclosure, the positive electrode active material has at least the following technical effects:
1) By reasonably controlling the particle morphology, the particle size distribution and the tap density of the positive electrode active material, the press density of the powder is effectively improved, so that the compaction capacity of the electrode sheet is improved, the effect of increasing the volumetric energy density of the battery is achieved, and the performance such as power, circulation, and storage and gas generation is not deteriorated;
2) By controlling the particle morphology, the particle size, and the pore structure of the positive electrode active material, the specific surface area and the porosity of the material are controlled, the effective contact area between the positive electrode active material and the electrolyte is improved, the ion transport, the electron transport, and the diffusion rate of the electrolyte are optimized, and the power performance of the battery is improved, especially the low-temperature power performance is improved.

### BRIEF DESCRIPTION OF DRAWINGS

### DESCRIPTION OF DRAWINGS

In order to illustrate the technical solutions in the embodiments of the present disclosure clearly, the accompanying drawings involved in the description of the embodiments will now be described briefly below. It is to be apparent that the accompanying drawings in the following description are merely some of the embodiments of the present disclosure, and other drawings may be made to those skilled in the art without involving any inventive effort based on these drawings.
FIG. 1 shows an electron microscopic characterization of a surface morphology of a positive electrode active material obtained in Example 2 of the present disclosure.
FIG. 2 shows an electron microscopic characterization of a cross-sectional morphology of the positive electrode active material obtained in Example 2 of the present disclosure.
FIG. 3 is a flow chart of a method of preparing a positive electrode active material according to an embodiment of the present disclosure.

### DETAILED DESCRIPTION OF EMBODIMENTS

Embodiments of the present disclosure will be described clearly and fully below in connection with the accompanying drawings of the present disclosure. It will be apparent that the described embodiments are merely a part of the embodiments of the present disclosure, rather than all the embodiments. Based on the embodiments in the present disclosure, all other embodiments obtained by a person skilled in the art without involving any inventive effort are within the scope of the present disclosure.

In this specification, the value range represented in combination with a symbol "-" means a range that includes values at the front and back of "-" as the minimum and maximum values, respectively.

Embodiments of the present disclosure provide a positive electrode active material, a battery, and a method of preparing thereof. Detailed descriptions are given below. It is to be noted that the order in which the following embodiments are described is not intended to define a preferred order of the embodiments.

A first aspect of the present disclosure provides a positive electrode active material. The positive electrode active material comprises secondary particles having pores thereon. The positive electrode active material has an I value satisfying 4≤I=BET×TD× (Dv90-Dv10) ≤14, in which BET denotes a value of specific surface area of the positive electrode active material, with a unit of m²/g; TD denotes a value of tap density of the positive electrode active material, with a unit of g/cm³; Dv90 denotes a particle size of the positive electrode active material having a cumulative volume distribution of 90%, with a unit of µm; and Dv10 denotes a particle size of the positive electrode active material having a cumulative volume distribution of 10%, with a unit of µm. The low-temperature discharge power performance is dominated by the positive electrode sheet of the battery. Therefore, the present disclosure controls the particle morphology, the particle size, the particle size distribution, the tap density and the pore structure of the positive electrode active material, thereby improving the low-temperature power performance and the volumetric energy density of the battery prepared using the positive electrode active material.

In some embodiments of the present disclosure, I satisfies 4.5≤I≤11.7. For example, I may be 4.5, 4.8, 5.1, 5.6, 6.1, 6.3, 6.9, 7.3, 7.8, 8.1, 8.6, 9.3, 9.7, 10.5, 11.7, or a range constituted by any two of these numerical values. In some embodiments of the present disclosure, 5.1≤I≤9.7. In some embodiments of the present disclosure, 5.6≤I≤8.6. When the value of I is within the range, the particle morphology, the particle size, the particle size distribution, the tap density, and the pore structure of the positive electrode active material are in a better state, so that the low-temperature power performance and the volumetric energy density of the battery can be improved.

At present, in terms of the design of materials and batteries, a method for increasing the energy density of a lithium ion battery mainly includes increasing the content of nickel element in a ternary material, increasing the upper voltage limit, or increasing the compaction capacity of an electrode sheet. The first two schemes can increase the calculated gram capacity of the material, but may cause deterioration of battery performance in varying degrees, such as decrease in thermal stability, aggravation in the side reaction with an electrolyte, and increase in the gas generation amount. Although the scheme of increasing the press density of the electrode sheet may increase the volumetric energy density of the battery, there are problems, such as particles being prone to breakage, many side reactions at an interface, a large amount of gas generation, and a poor long-term life. Therefore, according to the present disclosure, the particle morphology, the particle size, the particle size distribution, the tap density, and the pore structure of the positive electrode active material are controlled, so that the battery has higher energy density and better low-temperature power performance, while ensuring lower gas production and superior durable performance.

In some embodiments of the present disclosure, it satisfies 0.4≤BET≤3.5. For example, BET may be 0.4, 0.8, 1.1, 1.2, 1.4, 1.8, 2.0, 2.3, 2.8, 3.0, 3.5, or a range constituted by any two of these values. In some embodiments of the present disclosure, it satisfies 0.4≤BET≤2.7. BET of the positive electrode active material is controlled so that it is possible to better control the effective contact area between the positive electrode active material and the electrolyte, control the side reaction between the positive electrode active material and the electrolyte, and improve the power performance of the battery. The value of BET can be determined using a specific surface area analyzer (Model: Tristar II3020).

In some embodiments of the present disclosure, it satisfies 1.2≤TD≤2.6. For example, TD may be 1.2, 1.3, 1.4, 1.5, 1.8, 2.1, 2.2, 2.6, or a range constituted by any two of these values. In some embodiments of the present disclosure, it satisfies 1.3≤TD≤2.2. In some embodiments of the present disclosure, it satisfies 1.5≤TD≤2.1. The tap density of the positive electrode active material is reasonably controlled so that the press density of the powder is effectively increased, thereby improving the compaction capacity of the positive electrode sheet, and achieving the effect of increasing the volumetric energy density of the battery. The tap density test can be found in "Metallic Powders-Determination of Tap Density" in Chinese standard GB/T5162-2021.

In some embodiments of the present disclosure, it satisfies 4≤Dv90≤18. For example, Dv90 may be 4.7, 4.8, 4.9, 5.0, 5.2, 5.4, 5.5, 5.8, 10, 15, or a range constituted by any two of these values. In some embodiments of the present disclosure, it satisfies 4.9≤Dv90≤15. In some embodiments of the present disclosure, it satisfies 5.0≤Dv90≤10. In addition, it satisfies 1.5≤Dv10≤6. For example, Dv10 may be 1.5, 1.8, 2.1, 2.2, 2.4, 2.5, 2.6, 2.7, 2.8, 5, or a range constituted by any two of these values. In some embodiments of the present disclosure, it satisfies 1.5≤Dv10≤5. In some embodiments of the present disclosure, it satisfies 1.8≤Dv10≤2.8. The proper particle size distribution can be controlled to alleviate problem of particle breakage during rolling and to reduce the occurrence of side reactions at the interface. Dv90, Dv50, and Dv10 are determined using a Malvern laser granulometer.

In some embodiments of the present disclosure, it satisfies 2≤Dv50≤8. Dv50 denotes a particle size of the positive electrode active material having a cumulative volume distribution of 50% with a unit of µm.

In some embodiments of the present disclosure, the positive electrode active material has a maximum pore size of Dₘₐₓ nm, which satisfies: 800≤Dₘₐₓ≤2200, for example, may be 850, 1100, 1200, 1400, 1500, 1700, 1800, 1900, 2000, or a range constituted by any two of these values. In some embodiments of the present disclosure, it satisfies 850≤Dₘₐₓ≤2000. In some embodiments of the present disclosure, it satisfies 1100≤Dₘₐₓ≤1900. When the value of I is within the above range, and the maximum pore size of the positive electrode active material satisfies the conditions, the pore structure, particle morphology, particle size, particle size distribution, and tap density of the positive electrode active material may be controlled to be within a more suitable range, so that the battery has a higher energy density and a better low-temperature power performance.

In some embodiments of the present disclosure, the half peak width of the pore size distribution of the positive electrode active material is D_{HW} nm, satisfying: 150≤D_{HW}≤450, which may be, for example, 160, 200, 300, 400, 450, or a range constituted by any two of these values. In some embodiments of the present disclosure, it satisfies 160≤D_{HW}≤380. In some embodiments of the present disclosure, it satisfies 160≤D_{HW}≤300.

In some embodiments of the present disclosure, the positive electrode active material has a porosity P_{c}, which satisfies: 45%≤P_{c}≤75%, for example, may be 46%, 53%, 54%, 56%, 58%, 62%, 63%, 65%, 66%, 67%, 72%, or a range constituted by any two of these values. In some embodiments of the present disclosure, it satisfies 53%≤P_{c}≤72%. In some embodiments of the present disclosure, it satisfies 56%≤P_{c}≤67%. When the porosity P_{c} of the positive electrode active material is within the above range, the contact area between the positive electrode active material and the electrolyte can be controlled to be in a better range, so that the battery has better overall performance.

In some embodiments of the present disclosure, the positive electrode active material has a powder press density of P_{d} g/cm³, which satisfies: 2.8≤P_{d}≤3.4, for example, may be 2.9, 3.0, 3.1, 3.2, 3.3, or a range constituted by any two of these values. In some embodiments of the present disclosure, it satisfies 2.9≤P_{d}≤3.3.

The pore size distribution and porosity of the positive electrode active material are measured by a mercury intrusion method. The press density P_{d} is measured using a compaction densimeter, with a test procedure referring to the Chinese standard GB/T 24533-2019. According to the present disclosure, the specific surface area and the porosity of the material may be controlled by controlling the particle morphology, particle size and pore structure of the material, so that the effective contact area between the positive electrode active material and the electrolyte is improved, the ion transport, the electron transport and the diffusion rate of the electrolyte are optimized, and the power performance of the battery is improved, in particular the low-temperature power performance is improved. By controlling the proper particle size distribution and compressive strength of the positive electrode active material, the problem of particle breakage in the rolling process can be effectively alleviated, the side reaction at the interface in the battery is improved, the gas production is reduced, and the long-term life is improved.

In some embodiments of the present disclosure, the positive electrode active material comprises a nickel element, a cobalt element, and a Me element, and the content of the nickel element is greater than or equal to 0.3, based on the sum of molar amounts of the nickel element, the cobalt element, and the Me element being 1. Me is selected from at least one of Mn or Al.

In some embodiments of the present disclosure, the positive electrode active material comprises a nickel element, a cobalt element, and a Me element, and the content of the nickel element is greater than or equal to 0.5, based on the sum of molar amounts of the nickel element, the cobalt element, and the Me element being 1. Me is selected from at least one of Mn or Al.

In some embodiments of the present disclosure, the positive electrode active material comprises a nickel element, a cobalt element, and a Me element, and the content of the nickel element is less than or equal to 0.7, based on the sum of molar amounts of the nickel element, the cobalt element, and the Me element being 1, in which Me is selected from at least one of Mn or Al. When the porous positive electrode active material satisfies 4≤BET×TD× (Dv90-Dv10) ≤14, the stability of the positive electrode active material can be improved by controlling the content of the nickel element in the above range, so that the battery has better ion transport and electron transport, and can better mitigate the problems such as the reduction of thermal stability, the aggravation of side reaction with the electrolyte, and the increase of gas production, thereby obtaining better comprehensive performance.

In some embodiments of the present disclosure, the positive electrode active material comprises an M element including at least one of Y, Nb, In, La, Zr, Ce, W, Al, Ti, Sr, Mg, Sb, V, Zn, Cu, Cr, or Fe.

In some embodiments of the present disclosure, the positive electrode active material comprises an M element including at least one of Y, Nb, In, La, Zr, or Ce, and further including at least one of W, Al, Ti, Sr, Mg, Sb, V, Zn, Cu, Cr, or Fe.

In some embodiments of the present disclosure, the positive electrode active material comprises an M element comprising W and at least one of Y, Nb, In, La, Zr, Ce, Al, Ti, Sr, Mg, Sb, V, Zn, Cu, Cr, or Fe.

Further, the lithium nickel cobalt manganese oxide comprises a nickel element, a cobalt element, and a manganese element, and the content of the nickel element is greater than 0.3 based on the sum of molar amounts of the nickel element, the cobalt element, and the manganese element being 1.

Further, the positive electrode active material comprises particles represented by a formula of LiₓNi_{y}Co_{z}MeₖMₚO₂, in which Me is selected from at least one of Mn or Al, M comprises at least one ofY, Nb, In, La, Zr, Ce, W, Al, Ti, Sr, Mg, Sb, V, Zn, Cu, Cr or Fe, 0.8≤x≤1.1, 0<y<1, 0<z<1, 0<k<1, and 0≤p≤0.1.

In some embodiments of the present disclosure, the surface of the positive electrode active material particle further includes a coating material. The coating material comprises a coating element including at least one of Al, Ti, Co, W, Y, Si, B, P, or F. The coating material is coated on the surface of the positive electrode active material. Specifically, the coating material is coated on the surface of the positive electrode active material by a dry coating (high-temperature solid-state method). The surface of the positive electrode active material is partially or totally coated with a coating layer formed of the coating material. For example, the area of the coating layer in contact with the positive electrode active material is 50%, 60%, 70%, 80%, 90% or 100% of the surface area of the positive electrode active material. The addition of the coating material on the surface of the positive electrode active material may improve structural stability and rate performance of the positive electrode active material.

In some embodiments of the present disclosure, the positive electrode active material particles have a surface region comprising at least one of Al, Ti, Co, W, Y, Si, B, P, or F, and a central region adjacent to the surface region comprising the M element that includes Zr and W. When the porous positive electrode active material satisfies 4≤I=BET×TD× (Dv90-Dv10) ≤14, and the central region of the positive electrode active material contains the M element and the surface of the positive electrode active material contains the coating element, the positive electrode active material, when used in the positive electrode sheet, can have a better particle morphology and particle size to enable the positive electrode active material to have a better distribution in the positive electrode sheet. In addition, the composition of the M element and the coating element can be adjusted, and selecting superior M element and coating element can allow the structure of the positive electrode active material to be in a more optimal state, thereby making the battery in a better overall performance.

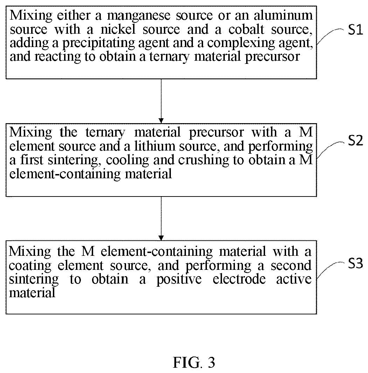

Accordingly, a second aspect of the present disclosure provides a method of preparing a positive electrode active material, as shown in FIG. 3, including:
S1: mixing either a manganese source or an aluminum source with a nickel source and a cobalt source, adding a precipitating agent and a complexing agent, and reacting to obtain a ternary material precursor;
S2: mixing the ternary material precursor with a M element source and a lithium source, and performing a first sintering, cooling and crushing to obtain a M element-containing material;
S3: mixing the M element-containing material with a coating element source, and performing a second sintering to obtain the positive electrode active material.

The present disclosure optimizes crystal nucleation rate and growth rate by changing process parameters such as pH value, the concentration of the complexing agent, and synthetic atmosphere in the preparation process of the precursor. The present disclosure also regulates sintering temperature, sintering time, and crushing strength. Since the regulation of the pore structure is very sensitive to the above parameters, a multi-stage accurate regulation of the above process parameters is required.

Further, the positive electrode active material comprises a compound represented by a formula of LiₓNi_{y}Co_{z}MeₖMₚO₂, in which Me is selected from at least one of Mn or Al, and M comprises at least one of Y, Nb, In, La, Zr, Ce, W, Al, Ti, Sr, Mg, Sb, V, Zn, Cu, Cr, or Fe, 0.8≤x≤1.1, 0<y<1, 0<z<1, 0<k<1, and 0≤p≤0.1.

In some embodiments of the present disclosure, the nickel source comprises at least one of nickel sulfate, nickel acetate, or nickel nitrate; the cobalt source comprises at least one of cobalt sulfate, cobalt acetate, or cobalt nitrate; the manganese source includes at least one of manganese sulfate, manganese acetate, or manganese nitrate; the aluminum source includes at least one of aluminum sulfate, aluminum acetate, or aluminum nitrate; the M element source includes at least one of zirconium nitrate, tungsten nitrate, aluminum nitrate, titanium nitrate, strontium nitrate, magnesium nitrate, yttrium nitrate, cerium nitrate, indium nitrate, niobium nitrate, lanthanum nitrate, antimony nitrate, vanadium nitrate, zinc nitrate, copper nitrate, chromium nitrate, iron nitrate, tungsten oxide, or zirconium oxide; the lithium source includes at least one of lithium hydroxide, lithium carbonate, lithium acetate, or lithium nitrate; the coating element source includes at least one of aluminum nitrate, titanium nitrate, cobalt nitrate, tungsten nitrate, yttrium nitrate, silicon oxide, boron oxide, phosphorus pentoxide, or aluminum oxide.

In some embodiments of the present disclosure, the precipitating agent comprises a sodium hydroxide solution, and the complexing agent comprises ammonia water.

Further, the ternary precursor, the M element source and the lithium source are mixed and sintered. The sintering temperature may be 600 to 1000°C, 700 to 900°C, or 800 to 880°C, to which the temperature is raised at a rate of 5 to 50°C/min. The sintering time may be 3 to 16 hours, 5 to 15 hours, or 8 to 10 hours.

Further, the M element-containing material and the coating element source are mixed and sintered. The sintering temperature may be 400 to 700°C, 450 to 600°C, or 500 to 550°C. The sintering time may be 1 to 9 hours, 2 to 8 hours, or 3 to 7 hours.

In particular, a method of preparing the positive electrode active material includes:
(1) a nickel source, a cobalt source, and any one of a manganese source or an aluminum source are weighed in a molar ratio and dissolved in deionized water, respectively, and process conditions such as a concentration of the ammonia water, pH value, a stirring speed, a reaction time, and a reaction temperature are controlled to synthesize a precursor. For example, the pH value may be controlled to be 10 to 13;
(2) the precursor obtained in step (1) is uniformly mixed with the M element source and the lithium source and sintered in an oxygen atmosphere, cooled to room temperature, and crushed to obtain the M element-containing material;
(3) The M element-containing material and the coating element source are mixed uniformly and sintered at 400 to 700°C for 1 to 9 h under an air atmosphere to obtain the positive electrode active material.

In addition, a third aspect of the present disclosure provides a battery including a positive electrode sheet. The positive electrode sheet includes a positive electrode current collector and a positive electrode active material layer disposed on the positive electrode current collector. The positive electrode active material layer includes the positive electrode active material described above or the positive electrode active material prepared by the preparation method described above.

In some embodiments of the present disclosure, the positive electrode active material layer has a real active area of A cm², satisfying: 4×10⁴≤A≤2×10⁵, which may be, for example, 4.5×10⁴, 6.5×10⁴, 7.6×10⁴, 8×10⁴, 9×10⁴, 1×10⁵, or a range constituted by any two of these numerical values. In some embodiments of the present disclosure, 6.5×10⁴≤A≤1×10⁵. In some embodiments of the present disclosure, 7.6×10⁴≤A≤9×10⁴. Real active area refers to an effective area that can participate in an electrochemical reaction. The real active area of the positive electrode active material layer is related to the pore structure, pore size distribution, specific surface area, and compressive resistance of the positive electrode active material, and the combination of the above material parameters and the press density of the positive electrode active material may cause a change in the real active area.

In some embodiments of the present disclosure, when the temperature is -20°C, and the state of charge (SOC) of the battery is 30%, the discharge power per unit volume of the positive electrode active material layer is P W/cm³, and 8≤P≤30, which may be, for example, 8.9, 14, 15, 16, 22, 23, 24, 25, 29, or a range constituted by any two of these values. In some embodiments of the present disclosure, 8.9≤P≤29. In some embodiments of the present disclosure, 15≤P≤25. The relationship between the low-temperature low-SOC discharge power P0 of the battery and the real active area A satisfies 0.6≤1000P0/A≤1, P=P₀×PD/m, P₀ W denotes the discharge power of the battery under the conditions; PD g/cm³ denotes the press density of the positive electrode active material layer; m g denotes the weight of the positive active material layer.

In some embodiments of the present disclosure, the positive electrode active material layer has the press density of PD g/cm³, satisfying: 2.4≤PD≤3.5, which may be, for example, 2.6, 2.8, 3.0, 3.1, 3.3, or a range constituted by any two of these values. In some embodiments of the present disclosure, 2.6≤Ps≤3.1. The porosity Pₛ of the positive electrode active material layer satisfies: 20%≤Pₛ≤40%, which may be, for example, 22%, 23%, 25%, 26%, 27%, 28%, 30%, 35%, or a range constituted by any two of these values. In some embodiments of the present disclosure, 22%≤Ps≤35%. In some embodiments of the present disclosure, 25%≤Ps≤30%.

In particular, the positive electrode active material or the positive electrode active material obtained by the above method is uniformly stirred with a conductive agent, a binder, and a solvent, and is subjected to steps such as sieving, coating, rolling, stripping, and cutting to form the positive electrode sheet. By varying the rolling parameters, the corresponding properties and parameters of the positive electrode sheet can also be controlled, as long as the positive electrode active material layer of the present disclosure can be controlled to satisfy the above-mentioned features.

Specifically, the battery includes a positive electrode sheet, a negative electrode sheet, an isolating membrane, and an electrolyte. The positive electrode sheet is the above positive electrode sheet. In a specific implement, the positive electrode sheet, the negative electrode sheet, the isolating membrane, the electrolyte, and the like are assembled into a lithium ion battery. The negative electrode material used for the negative electrode sheet may be one or more of artificial graphite, natural graphite, mesocarbon microspheres, amorphous carbon, lithium titanate, or silicon-carbon alloy. The negative electrode material also need to have performs such as high press density, high mass specific capacity, and high volume specific capacity.

In some embodiments, the electrolyte includes an organic solvent, which may include a chain ester and a cyclic ester. The mass percentage of the chain ester may be greater than that of the cyclic ester. The cyclic ester may include at least one of ethylene carbonate (EC) or propylene carbonate (PP), and the chain ester may include at least one of dimethyl carbonate (DMC), ethyl methyl carbonate (EMC) or diethyl carbonate (DEC). In some embodiments, the solvent of the electrolyte includes EC, EMC, and DEC. In some embodiments, the mass ratio of EC, EMC, and DEC is (10 to 25): (10 to 25): (51 to 75). In some embodiments, the preparation of the electrolyte includes dissolving the sufficiently dried lithium salt in an organic solvent in an argon atmosphere glovebox having a water content of <10ppm, and mixing uniformly to obtain the electrolyte. The concentration of the lithium salt is 0.8 to 1.3 mol/L.

In some embodiments, the lithium salt may be LiPF₆ (lithium hexafluorophosphate), LiBF₄ (lithium tetrafluoroborate), or the like.

In some embodiments, the preparation of the isolating membrane includes selecting a polypropylene film having a thickness of 9 to 18 µm as the isolating membrane. The isolating membrane is not particularly limited, and any well-known porous isolating membrane having electrochemical stability and mechanical stability can be selected.

A fourth aspect of the present disclosure provides an electrical device including the battery described above.

In some embodiments, the electrical device of the present disclosure is, but is not limited to, a backup power supply, an electric motor, an electric vehicle, an electric motorcycle, a booster bicycle, a bicycle, an electric tool, a large battery for a household, and the like.

The following description is made in connection with specific examples.

### Example 1

This example provides a method of preparing a positive electrode active material and a positive electrode sheet.

The preparation of the positive electrode active material includes the following steps:
1) Nickel sulfate, cobalt sulfate, and manganese sulfate were weighed at a molar ratio of Ni: Co: Mn=0.5:0.2:0.3, and dissolved in deionized water, respectively. Each of the obtained metal solutions was transferred to a reaction kettle through pipes to form a mixed metal solution. Nitrogen gas was introduced into the mixed metal solution to serve as a protective gas. NaOH aqueous solution was added to the mixed metal solution to serve as a precipitating agent, and ammonia water was added to serve as a complexing agent. The concentration of the ammonia water and pH value of the mixed solution were adjusted in stages to react for 10 hours to obtain a precursor.
2) The precursor, lithium carbonate, tungsten oxide and zirconium oxide were mixed homogeneously, controlling the lithium ration to be 1.1:1, and the weight ratios of tungsten oxide and zirconium oxide to the precursor were 0.6wt% and 0.37wt%, respectively.
3) The mixed material was transferred to a sintering process including two stages: in a first stage, the sintering was performed at 600°C for 6 hours; and in a second stage, the sintering was performed at 880°C for 10 hours.
4) The sintered material was crushed, and then the crushed material was mixed with aluminum oxide uniformly, in which the weight ratio of the aluminum oxide to the crushed material was 0.5wt%.
5) The mixed material was transferred to another sintering process at a sintering temperature of 450°C for 8 hours to obtain the positive electrode active material.
6) The positive electrode active material, a conductive agent, and a binder were mixed in a mass ratio of 97:1.5:1.5, mixed uniformly with a solvent, and then subjected to processes such as sieving, coating, rolling, stripping, and cutting to obtain the positive electrode sheet. The parameters of the obtained positive electrode active material and positive electrode sheet were specifically shown in Table 1 and Table 2.

The methods of preparing the positive electrode active materials and the positive electrode sheets in Examples 2 to 8, 14 to 18, and Comparative Examples 1 to 3 were substantially the same as that in Example 1, except that the relevant preparation parameters of the positive electrode active materials were changed in Examples 2 to 8 and Comparative Examples 1 to 3, and the ratio of nickel, cobalt and manganese and process parameters such as the pH value, concentration of ammonia water, and synthetic atmosphere were further changed in Examples 14 to 18, whereby the pore size distribution, porosity, and specific surface area of the positive electrode active materials can be controlled to obtain the positive electrode active material having a predetermined parameter characteristic, and the positive electrode sheet having the predetermined parameter characteristic can be obtained by using such positive electrode active material. Specific parameters are shown in Table 1 and Table 2. Here, Comparative Examples 1 to 3 list cases in which the specific surface area, pore size, and porosity parameters are not in the range of the present disclosure, and do not reach the desired real active area of the positive electrode active material layer.

The same positive electrode active material, and the same conductive agent and binder as in Example 1 were used in Examples 19 to 22, except that the rolling parameters in the preparation of the electrode sheet were changed in Example 19 to 22. By controlling the press density of the positive electrode sheet, the porosity and real active area of the positive electrode sheet were controlled to obtain the positive electrode sheet having the predetermined parameter performance. The specific parameters are shown in Table 1 and Table 2.

The differences between Example 1 and Examples 9 to 13 are the M element and the coating element, but it is ensured that the pore size distribution, specific surface area and I value of the materials are in an appropriate range. The specific parameters of the material and the electrode sheet are shown in Table 1 and Table 2.

The method of testing real active area A of the positive electrode active material layer is as follows:
1) adjusting the battery to a specified SOC (e.g., 30% SOC);
2) transferring the SOC-adjusted battery to a glove box for disassembly, cutting a positive electrode sheet with a sample preparation mold of a symmetrical battery for sample preparation (the sample size of the positive electrode sheet is 46 × 28 mm), pouring a proper amount of high-purity anhydrous dimethyl carbonate DMC for soaking and cleaning, replacing the DMC every 8 hours, and continuously cleaning for 3 times, and preparing the symmetrical battery by using the positive electrode sheet after drying for 12 hours;
3) performing an EIS test on the symmetrical battery, reading out the frequency f corresponding to the maximum radius according to the EIS test curve (Nyquist plot), and calculating the angular velocity ωₘₐₓ according to the equation ωₘₐₓ=2πf;
4) fitting the symmetrical cell EIS to obtain a specific value of the charge transfer impedance R_{ct};
5) calculating by using the formula A=1/20ωₘₐₓR_{ct} to obtain the real active area A of the electrode.

**Table 1**

| No. | Ni/Co/Mn ratio | BET (m²/g) | TD (g/cm³) | Dv10 (µ m) | Dv50 (µ m) | Dv90 (µm) | I | Dₘₐₓ (nm) | D_{HW} (nm) | P_{c} (%) |
|---|---|---|---|---|---|---|---|---|---|---|
| Example 1 | 5/2/3 | 1.21 | 2.11 | 2.42 | 3.32 | 4.71 | 5.8 | 1200 | 200 | 53.5 |
| Example 2 | 5/2/3 | 1.82 | 1.52 | 1.84 | 3.21 | 5.03 | 8.8 | 2000 | 380 | 62 |
| Example 3 | 5/2/3 | 3.02 | 1.33 | 2.83 | 3.91 | 5.51 | 10.8 | 1700 | 420 | 66.8 |
| Example 4 | 5/2/3 | 1.53 | 1.81 | 2.22 | 3.22 | 5.03 | 7.8 | 1800 | 300 | 58.7 |
| Example 5 | 5/2/3 | 2.31 | 1.41 | 2.61 | 3.12 | 5.68 | 10.0 | 1900 | 400 | 63.3 |
| Example 6 | 5/2/3 | 2.71 | 1.32 | 2.52 | 3.09 | 5.87 | 12.0 | 1800 | 420 | 67.9 |
| Example 7 | 5/2/3 | 0.98 | 2.12 | 2.78 | 3.89 | 5.46 | 5.6 | 850 | 160 | 46.3 |
| Example 8 | 5/2/3 | 2.96 | 1.28 | 2.14 | 3.08 | 5.27 | 11.9 | 1400 | 450 | 75.5 |
| Example 9 | 5/2/3 | 1.21 | 2.19 | 2.51 | 3.53 | 4.82 | 6.1 | 1213 | 203 | 54.3 |
| Example 10 | 5/2/3 | 1.12 | 2.21 | 2.50 | 3.61 | 5.08 | 6.4 | 1226 | 211 | 56.2 |
| Example 11 | 5/2/3 | 1.22 | 2.19 | 2.52 | 3.44 | 4.79 | 6.1 | 1196 | 202 | 54 |
| Example 12 | 5/2/3 | 1.21 | 2.20 | 2.50 | 3.50 | 4.91 | 6.4 | 1187 | 198 | 53.3 |
| Example 13 | 5/2/3 | 1.21 | 2.21 | 2.51 | 3.54 | 4.90 | 6.4 | 1195 | 199 | 53.6 |
| Example 14 | 6/1.5/2.5 | 1.24 | 2.23 | 2.50 | 3.50 | 4.95 | 6.8 | 1400 | 200 | 56.9 |
| Example 15 | 6/1.5/2.5 | 1.53 | 1.81 | 2.21 | 3.23 | 5.01 | 7.8 | 1800 | 300 | 58.7 |
| Example 16 | 6/1.5/2.5 | 1.73 | 1.54 | 1.81 | 3.21 | 5.08 | 8.7 | 2000 | 380 | 61.8 |
| Example 17 | 6/1.5/2.5 | 2.63 | 1.33 | 2.83 | 3.91 | 5.51 | 9.4 | 1700 | 400 | 63.2 |
| Example 18 | 6/1.5/2.5 | 2.71 | 1.36 | 2.55 | 3.12 | 5.89 | 12.3 | 1800 | 420 | 65.1 |
| Example 19 | 5/2/3 | 1.21 | 2.12 | 2.43 | 3.32 | 4.72 | 5.9 | 1200 | 200 | 53.5 |
| Example 20 | 5/2/3 | 1.22 | 2.10 | 2.44 | 3.33 | 4.73 | 5.9 | 1200 | 200 | 53.5 |
| Example 21 | 5/2/3 | 1.21 | 2.11 | 2.43 | 3.31 | 4.72 | 5.8 | 1200 | 200 | 53.5 |
| Example 22 | 5/2/3 | 1.22 | 2.10 | 2.42 | 3.32 | 4.73 | 5.9 | 1200 | 200 | 53.5 |
| Comparative Example 1 | 5/2/3 | 0.75 | 2.21 | 2.43 | 3.13 | 4.72 | 3.8 | 780 | 140 | 44.2 |
| Comparative Example 2 | 5/2/3 | 2.83 | 1.22 | 1.52 | 3.97 | 5.84 | 14.9 | 2500 | 470 | 78.3 |
| Comparative Example | 5/2/3 | 3.62 | 1.22 | 2.13 | 3.02 | 5.21 | 13.6 | 2100 | 450 | 75.6 |

**Table 2**

| No. | Ni/Co/Mn ratio | M element | Coating element | P_{d} (g/cm³) | A (cm²) | PD (g/cm²) | Pₛ (%) |
|---|---|---|---|---|---|---|---|
| Example 1 | 5/2/3 | Zr+W | Al | 3.1 | 9.0×10⁴ | 3.0 | 22.7 |
| Example 2 | 5/2/3 | Zr+W | Al | 3.1 | 1.3×10⁵ | 3.0 | 26.1 |
| Example 3 | 5/2/3 | Zr+W | Al | 3.0 | 1.4×10⁵ | 3.0 | 30.2 |
| Example 4 | 5/2/3 | Zr+W | Al | 3.1 | 9.9×10⁴ | 3.0 | 25.1 |
| Example 5 | 5/2/3 | Zr+W | Al | 3.0 | 1.3×10⁵ | 3.0 | 27.3 |
| Example 6 | 5/2/3 | Zr+W | Al | 3.1 | 1.4×10⁵ | 3.0 | 28.6 |
| Example 7 | 5/2/3 | Zr+W | Al | 3.1 | 4.5×10⁴ | 3.0 | 20.3 |
| Example 8 | 5/2/3 | Zr+W | Al | 3.1 | 1.8×10⁵ | 2.9 | 32.3 |
| Example 9 | 5/2/3 | Sr+W | Al | 3.1 | 9.0×10⁴ | 3.0 | 22.6 |
| Example 10 | 5/2/3 | Zr+Ce | Al | 3.1 | 8.7×10⁴ | 3.0 | 21.9 |
| Example 11 | 5/2/3 | Zr+W | Al+B | 3.1 | 9.3×10⁴ | 3.0 | 23.3 |
| Example 12 | 5/2/3 | Zr+W | Al+Ti | 3.1 | 8.9×10⁴ | 3.0 | 22.3 |
| Example 13 | 5/2/3 | Zr | Al | 3.1 | 9.0×10⁴ | 3.0 | 22.6 |
| Example 14 | 6/1.5/2.5 | Zr+W | Al | 3.1 | 9.3×10⁴ | 3.0 | 23.2 |
| Example 15 | 6/1.5/2.5 | Zr+W | Al | 3.1 | 9.9×10⁴ | 3.0 | 25.1 |
| Example 16 | 6/1.5/2.5 | Zr+W | Al | 3.1 | 1.3×10⁵ | 3.0 | 26.1 |
| Example 17 | 6/1.5/2.5 | Zr+W | Al | 3.1 | 1.4×10⁵ | 3.0 | 30.2 |
| Example 18 | 6/1.5/2.5 | Zr+W | Al | 3.1 | 1.4×10⁵ | 3.0 | 28.5 |
| Example 19 | 5/2/3 | Zr+W | Al | 3.1 | 6.5×10⁴ | 2.4 | 39.8 |
| Example 20 | 5/2/3 | Zr+W | Al | 3.1 | 7.6×10⁴ | 2.6 | 30.7 |
| Example 21 | 5/2/3 | Zr+W | Al | 3.2 | 8.2×10⁴ | 2.8 | 27.1 |
| Example 22 | 5/2/3 | Zr+W | Al | 3.0 | 8.6×10⁴ | 3.2 | 20.1 |
| Comparative Example 1 | 5/2/3 | Zr+W | Al | 3.1 | 3.6×10⁴ | 2.9 | 22.1 |
| Comparative Example 2 | 5/2/3 | Zr+W | Al | 2.9 | 2.1×10⁵ | 2.8 | 35.4 |
| Comparative Example 3 | 5/2/3 | Zr+W | Al | 3.0 | 2.1×10⁵ | 3.0 | 34.8 |

The lithium ion batteries of Examples 1 to 22 and Comparative Examples 1 to 3 were tested for low-temperature power, high-temperature storage, and high-temperature gas generation. The low-temperature power test flow was performed as follows: after the battery was adjusted to 30% SOC, the battery was allowed to stand at a temperature of -20°C to stabilize the surface temperature of the battery. When the battery was discharged at a power P₀ W for 10 s and the terminal voltage was 2.21 to 2.26 V, the test power was considered to be successful, that is, at this time, P₀ W was the low-temperature discharge power of the battery. The high temperature storage test flow was performed as follows: the battery was charged to 4.3 V, and stored in a thermotank at 60°C. The residual capacity was tested every 30 days and recharged to full for storage, and the calculation method is as follows: the battery was tested for the initial capacity Q₀ before being stored in the thermotank, taken out from the thermotank every 30 days, and tested for the residual capacity Q after cooling. "Q/Q₀×100%" means the storage capacity retention rate of the battery. The high-temperature gas generation test flow was performed as follows: three battery samples were taken, charged to 4.3V, and stored in a thermotank at 60°C. The battery volumes were measured by draining every 15 days, and 1C full charge every 30 days. The calculation method is as follows: the initial volume V₀ was measured by draining, the battery was taken out from the thermotank every 15 days, and after cooling, the battery volume V was measured by draining. "(V/V0-1)×100%" means the high temperature storage volume expansion rate.

The performance data are shown in Table 3:

**Table 3**

| No. | P₀ (W) | P (W/cm³) | Capacity retention ratio after 90 days of storage at 60°C | Volume expansion ratio after 75 days of storage at 60°C |
|---|---|---|---|---|
| Example 1 | 66 | 15.2 | 82.8% | 26.5% |
| Example 2 | 98 | 22.4 | 82.0% | 29.2% |
| Example 3 | 105 | 24.2 | 77.4% | 51.9% |
| Example 4 | 73 | 16.8 | 82.5% | 27.9% |
| Example 5 | 95 | 22.0 | 81.4% | 35.3% |
| Example 6 | 103 | 23.7 | 79.5% | 39.9% |
| Example 7 | 35 | 8.1 | 86.2% | 20.1% |
| Example 8 | 132 | 29.4 | 73.3% | 48.7% |
| Example 9 | 66 | 15.2 | 82.7% | 26.4% |
| Example 10 | 64 | 14.8 | 82.9% | 26.0% |
| Example 11 | 68 | 15.7 | 82.5% | 26.7% |
| Example 12 | 65 | 15.0 | 82.7% | 27.3% |
| Example 13 | 65 | 15.0 | 80.1% | 29.3% |
| Example 14 | 65 | 15.0 | 81.8% | 28.4% |
| Example 15 | 71 | 16.4 | 80.9% | 29.6% |
| Example 16 | 95 | 21.9 | 79.6% | 30.3% |
| Example 17 | 102 | 23.5 | 78.5% | 36.9% |
| Example 18 | 99 | 22.8 | 77.8% | 40.6% |
| Example 19 | 48 | 8.9 | 85.1% | 24.2% |
| Example 20 | 56 | 11.2 | 84.7% | 25.1% |
| Example 21 | 60 | 12.9 | 83.5% | 25.7% |
| Example 22 | 63 | 15.5 | 82.4% | 26.9% |
| Comparative Example 1 | 25 | 5.6 | 83.6% | 23.5% |
| Comparative Example 2 | 150 | 32.3 | 72.2% | 60.3% |
| Comparative Example 3 | 146 | 33.7 | 73.1% | 59.3% |

Material-related parameters of different pore size distributions in Examples 1 to 8 and Comparative Examples 1 to 3 are compared. As the pore size Dₘₐₓ of the positive electrode active material increases and the half peak width D_{HW} of the pore size distribution increases, the porosity P_{c} of the positive electrode active material increases. After the same electrode and battery fabrication process, the real active area A of the positive electrode active material layer increases, and the low-temperature power performance of the battery is improved.

Relevant parameters of different densified positive electrode active material layers in Examples 1, 19 to 22, and 14 to 18 are compared. As the densification density and porosity Ps of the positive electrode active material layer are changed, the real active area A of the positive electrode active material layer is affected, and the low-temperature power of the battery is also affected, indicating that there is a suitable combination of I value, Ps, and densification density, so that the low-temperature power performance is better.

Material-related parameters of different M elements in Examples 1 and 9 to 10 are compared. When the positive electrode active material has two M elements, especially containing W, the battery has better overall performance than only one M element.

Material-related parameters of the different coating elements in Examples 1 and 11-12 are compared. The modification and replacement of the above coating elements have no significant effect on the pore size distribution and porosity of the positive electrode active material, and have no significant effect on the electrical performance of the battery.

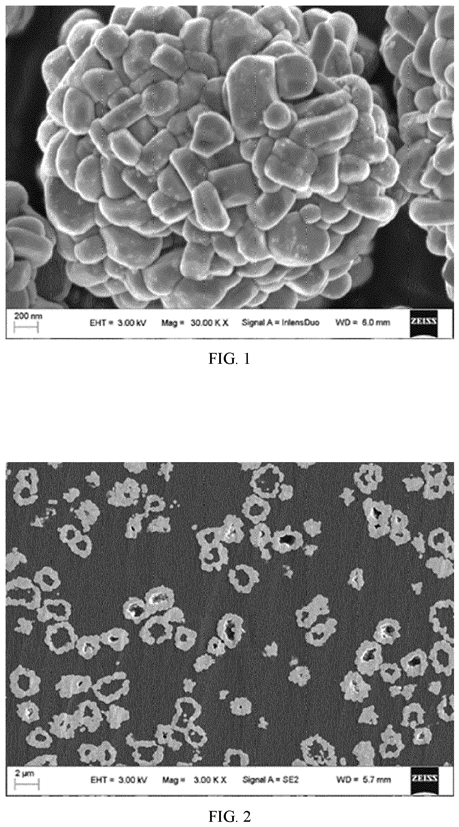

FIG. 1 shows an electron microscopic characterization diagram of the surface morphology of the positive electrode active material obtained in Example 2 of the present disclosure, and FIG. 2 shows an electron microscopic characterization diagram of the cross-sectional morphology of the positive electrode active material obtained in Example 2 of the present disclosure.

The present disclosure can, without affecting the processing of the slurry and the positive electrode sheet, allow the positive electrode active material layer to have a high real active area, improve the effective contact area between the positive electrode active material and the electrolyte, optimize the ion transport, electron transport and diffusion rate of the electrolyte, and improve the power performance of the battery cell, especially the low-temperature power performance. The positive electrode active material prepared by the present disclosure has superior particle size distribution and compressive strength, and can effectively alleviate the problem of particle breakage during rolling, improve interfacial side reactions of batteries, reduce gas production and improve long-term life. The positive electrode active material and the positive electrode sheet of the present disclosure have superior compaction capability, and can ensure the weight of the active substance per unit volume, thereby ensuring the unit volume capacity of the battery.

The foregoing provides a detailed description on the positive electrode active material, the battery, and the method of preparing the same. Specific examples are applied herein to illustrate the principles and implementations of the present disclosure. The description of the above embodiments is merely provided to help understand the method of the present disclosure and the core idea thereof. Variations may be made to those skilled in the art in both the detailed implementations and the scope of application in accordance with the teachings of the present disclosure. In view of the foregoing, the present description should not be construed as limiting the application.

## Claims

1. A positive electrode active material, comprising secondary particles with pores thereon and satisfying 4≤BET×TD× (Dv90-Dv10) ≤14,
wherein BET denotes a value of a specific surface area of the positive electrode active material, with a unit of m²/g; TD denotes a value of a tap density of the positive electrode active material, with a unit of g/cm³; Dv90 denotes a particle size of the positive electrode active material having a cumulative volume distribution of 90%, with a unit of µm; and Dv10 denotes a particle size of the positive electrode active material having a cumulative volume distribution of 10%, with a unit of µm.

2. The positive electrode active material according to claim 1, wherein 0.4≤BET≤3.5; 1.2≤TD≤2.6; 4≤Dv90≤18; and 1.5≤Dv10≤6.

3. The positive electrode active material according to claim 1, wherein the positive electrode active material has a maximum pore size of Dₘₐₓ nm, satisfying 800≤Dₘₐₓ≤2200.

4. The positive electrode active material according to claim 1, wherein the positive electrode active material has a half peak width of a pore size distribution being D_{HW} nm, satisfying 150≤D_{HW}≤450.

5. The positive electrode active material according to claim 1, wherein the positive electrode active material has a porosity P_{c}, satisfying 45%≤P_{c}≤75%.

6. The positive electrode active material according to claim 1, wherein the positive electrode active material has a powder press density of P_{d} g/cm³, satisfying 2.8≤P_{d}≤3.4.

7. The positive electrode active material according to any one of claims 1 to 6, wherein the positive electrode active material comprises a compound represented by a formula of LiₓNi_{y}Co_{z}MeₖMₚO₂, Me is selected from at least one of Mn or Al, M comprises at least one of Y, Nb, In, La, Zr, Ce, W, Al, Ti, Sr, Mg, Sb, V, Zn, Cu, Cr, or Fe, 0.8≤x≤1.1, 0<y<1, 0<z<1, 0<k<1, and 0≤p≤0.1.

8. The positive electrode active material according to claim 1, wherein the positive electrode active material comprises a lithium nickel cobalt manganese oxide comprising a nickel element, a cobalt element, and a manganese element, and the nickel element is present in an amount greater than 0.3, based on a sum of moles of the nickel element, the cobalt element, and the manganese element being 1.

9. A method of preparing the positive electrode active material according to any one of claims 1 to 8, comprising:
mixing either a manganese source or an aluminum source with a nickel source and a cobalt source, adding a precipitating agent and a complexing agent, and reacting to obtain a ternary material precursor;
mixing the ternary material precursor with a M element source and a lithium source, and performing a first sintering, cooling and crushing to obtain a M element-containing material; and
mixing the M element-containing material with a coating element source, and performing a second sintering to obtain the positive electrode active material.

10. The method of preparing the positive electrode active material according to claim 9, wherein the nickel source comprises at least one of nickel sulfate, nickel acetate or nickel nitrate; the cobalt source comprises at least one of cobalt sulfate, cobalt acetate, or cobalt nitrate; the manganese source comprises at least one of manganese sulfate, manganese acetate, or manganese nitrate; the aluminum source comprises at least one of aluminum sulfate, aluminum acetate, or aluminum nitrate; the M element source comprises at least one of zirconium nitrate, tungsten nitrate, aluminum nitrate, titanium nitrate, strontium nitrate, magnesium nitrate, yttrium nitrate, cerium nitrate, indium nitrate, niobium nitrate, lanthanum nitrate, antimony nitrate, vanadium nitrate, zinc nitrate, copper nitrate, chromium nitrate, iron nitrate, tungsten oxide, or zirconium oxide; the lithium source comprises at least one of lithium hydroxide, lithium carbonate, lithium acetate, or lithium nitrate; the coating element source comprises one or more of aluminum nitrate, titanium nitrate, cobalt nitrate, tungsten nitrate, yttrium nitrate, silicon oxide, boron oxide, phosphorus pentoxide, or aluminum oxide.

11. The method of preparing the positive electrode active material according to any one of claims 9 to 10, wherein an amount of the coating element source is 0.3 wt% to 0.7 wt% of the M element-containing material, the precipitating agent comprises a sodium hydroxide solution, and the complexing agent comprises ammonia water.

12. The method of preparing the positive electrode active material according to any one of claims 9 to 10, wherein the first sintering is performed at 600 to 1000°C for 3 to 16 hours, and the second sintering is performed at 400 to 700°C for 1 to 9 hours.

13. A battery comprising a positive electrode sheet, wherein the positive electrode sheet comprises a positive electrode current collector and a positive electrode active material layer disposed on the positive electrode current collector, and the positive electrode active material layer comprises the positive electrode active material according to any one of claims 1 to 8 or the positive electrode active material prepared by the method according to any one of claims 9 to 12.

14. The battery according to claim 13, wherein the positive electrode active material layer satisfies at least one of the following:
(i) the positive electrode active material layer has a real active area of A cm², satisfying 4×10⁴≤A≤2×10⁵;
(ii) the positive electrode active material layer has a press density of PD g/cm³, satisfying 2.4≤PD≤3.5;
(iii) the positive electrode active material layer has a porosity of Pₛ, satisfying 20%≤Pₛ≤40%;

15. An electrical device comprising the battery according to claim 14.
